Europäisches Patentamt

European Patent Office

Office européen des brevets

(19)

(11) Publication number: **0 086 357**
**A1**

## EUROPEAN PATENT APPLICATION

(21) Application number: **83100605.1**

(22) Date of filing: **24.01.83**

(51) Int. Cl.³: **C 21 D 9/14**, C 21 D 1/09,
F 16 J 10/04

(30) Priority: **12.02.82 IT 6716282**

(43) Date of publication of application: **24.08.83**
**Bulletin 83/34**

(84) Designated Contracting States: **AT BE CH DE FR GB LI NL SE**

(71) Applicant: **FIAT Veicoli Industriali S.p.A., Via Puglia 35, I-10156 Turin (IT)**

(72) Inventor: **Pera, Luciano, Viale Lombardia, 3/4, I-10048 Vinovo (Torino) (IT)**

(74) Representative: **Boggio, Luigi et al, c/o Ingg. Carlo e Mario Torta Via Viotti, 9, I-10121 Torino (IT)**

(54) **Method for providing a crankcase for a reciprocating internal combustion engine and crankcase realized by said method.**

(57) A method to provide a crankcase (1) for a reciprocating internal combustion engine having substantially a treatment during which a surface layer (6) of each cylindric seat (3) of the crankcase (1) is subjected to hardening in order to induce a transformation of state, from ferritic to substantially martensitic, in the material forming said layer (6).

- 1 -

"METHOD FOR PROVIDING A CRANKCASE FOR A RECIPROCA
TING INTERNAL COMBUSTION ENGINE AND CRANKCASE REA
LIZED BY SAID METHOD"

The present invention refers to a method for providing a crankcase for a reciprocating
internal combustion engine and to the respective
crankcase so obtained.

As known, the present crankcases for internal combustion engines have a supporting body
obtained from iron casting and provided with cylindric seats into which tubular barrels are fitted,
and inside which barrels, in use, the pistons
slide.

The crankcases of the above-mentioned
type suffer from some disadvantages substantially due to the use of the barrels. In fact, frequently a small gap forms between each barrel and

the corresponding cylindric seat which makes the thermal transfer worse and the cooling of the crankcase more difficult. Since the supporting action is carried out substantially by the crankcase, this latter presents, together with the barrels, a total mass fairly high which affects both the weight and the cost of the material needed. This mass is particularly high in the case of crankcases for diesel engines, in which between contiguous barrels it is necessary to form a gap into the crankcase in order to allow the flow of a liquid for the cooling of the crankcase itself. To the above-mentioned drawbacks it is necessary to add the costs connected with the prearrangement of the cylindric seats in the crankcase, with the preparation and machining of the barrels and with the labor required to fit the barrels into the corresponding seats.

The object of the present invention is to provide a method which allows to obviate the above-mentioned drawbacks in the production of crankcases for reciprocating internal combustion engines.

This object is obtained with the present invention which relates to a method for the produc-

tion of a crankcase for a reciprocating internal combustion engine, characterized in that it provides a treatment during which a surface layer of each cylindric seat of the said crankcase is subjected to a hardening so as to produce a transformation af state, from ferritic to substantially martensitic, of the material forming the said layer.

The present invention further relates to a crankcase for a reciprocating internal combustion engine provided whith a cast iron body and having cylindric seats, characterized in that each of said seats has at least one layer the surface structure of which is substantially of the martensitic type.

For a better understanding of the present invention, it will be now described, as a non limiting example, a preferred embodiment, with reference to the accompanying drawing, in which:

figures 1 and 2 are elevation and cross-section views of parts of two crankcases embodying the method of the present invention; and

figure 3 is a photomicrograph of a cross section of a surface layer of a preselected area in anyone of the crankcases of figures 1 and 2 above mentioned.

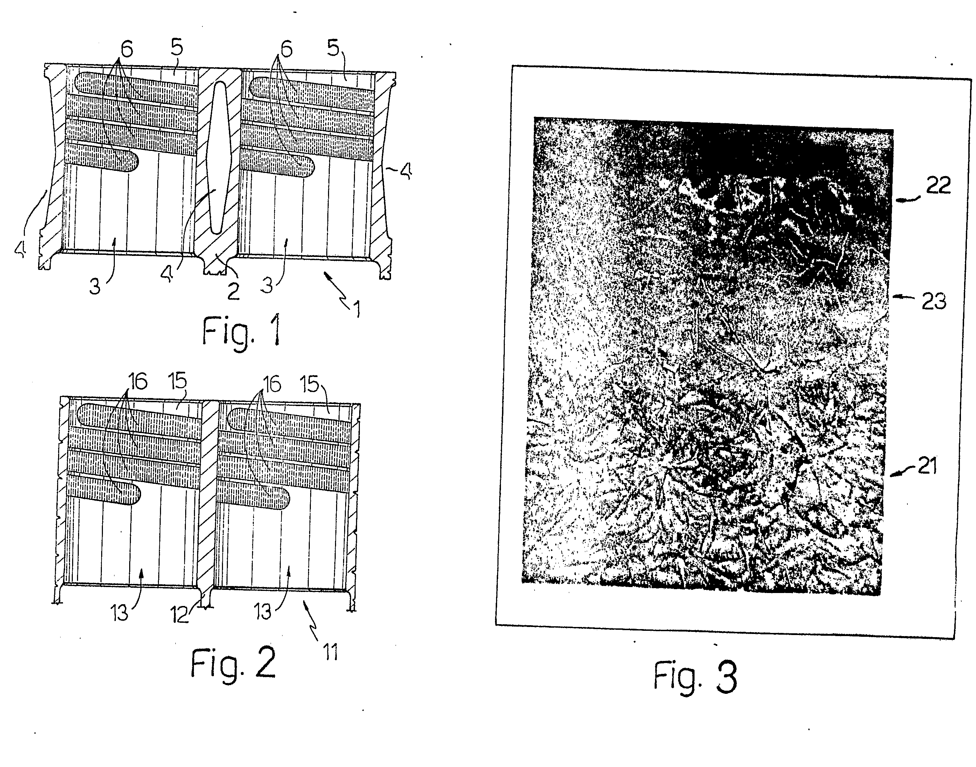

With particular reference to figure 1, it is referenced generally in 1 a part of the cast iron crankcase of an internal combustion engine, as for instance a crankcase of a diesel engine. The crankcase 1 has a supporting body 2 in which cylindric seats 3 are machined, between which seats in the body 2 are provided gaps 4 in which flows, in use, a cooling liquid. According to the present invention, each cylindric seat 3 has, in an annular area 5 next to the top dead center, a hardened surface layer 6, the structure of which is substantially of the martensitic type, while the material forming the remaining part of the body 2 has a structure substantially of the ferritic type. Preferably, the surface layer 6 is obtained subjecting the inner surface of area 5 to a treatment with a power laser beam. In particular the laser beam is directed on the surface of the area 5 in such a way as to follow a circular path and with values of specific power in the range from 300 to 3000 W per square centimeter.

With particular reference to figure 2, it is referenced generally with 11 a crankcase quite similar to the crankcase 1 previously described, but preferably utilizable for engines of

new generation (more compact, light and cheap). In the crankcase 11 are represented with 12 the cast iron supporting body, with 13 the cylindric seats machined in the body 12, with 15 the area next to the top dead center and with 16 the hardened surface layer.

Referring to figure 3, it is represented with 21 an area having a structure of the ferritic type and forming the base material of the body 2, with 22 a surface area having a structure of the martensitic type and forming the surface layer 6 or 16, and with 23 a thermally modified area arranged between the above-mentioned areas 21 and 22.

As said above, the method according to the present invention consists substantially in sending a laser beam having a suitable power on the inner surface of each cylindric seat 3, 13 of the crankcase 1, 11 at issue, to obtain the required change from ferritic to martensitic state. As a consequence it has been noted that it is no more necessary to have the barrel fitted into the corresponding cylindric seat, and hence are automatically overcome the drawbacks connected with the use of the above-mentioned barrel. In particular, the thermal transfer results highly increased, as the heat transfer takes place in a better way due to the lack of any gap. In case it is not of interest the flow of the cooling liquid, as shown in figure 2, the dimensions of the crankcase can be reduced, or in other words it is possible to "shorten" the engine without reducing the diameter of the cylinders. It has also been observed that the hardening of the area adjacent to the top dead center causes an overall improvement of the wear resistance of the body 2 or 12 with a consequent increase of the life of the respective crankcase.

Preferably, before or after said treatment with laser, the inside of each cylindric seat is subjected to a grinding operation. It is therefore obvious that the costs connected with the need of labor are drastically reduced as compared with the corresponding costs for the production of the present crankcases.

It is finally obvious that changes and modifications can be made to the above-mentioned method and crankcases, without departing from the scope of the invention. For example, the hardening of the layer 6, 16 could also be obtained with a surface hardening operation without the use of the laser beam. Further, it is not limiting the shape of the hardened surface layer 6 or 16: for example the latter could be formed by a single annular band of predetermined height, by a multi-start elliptic curve, by a plurality of parallel bands axial or oblique and equidistant, etc.

Dr. Ing. Luigi BOGGIO

0086357

CLAIMS

1. A method for providing a crankcase for a reciprocating internal combustion engine, characterized in that it provides a treatment during which a surface layer (6) of each cylindric seat (3) of the said crankcase (1) is subjected to hardening to induce a state transformation, from substantially ferritic to substantially martensitic, in the material forming the said layer (6).

2. A method according to claim 1, characterized in that the said hardening is obtained by means of a laser beam.

3. A method according to claim 2, characterized in that the said laser beam is directed on said layer with a specific power in the range from 300 to 3000 W per square centimeter.

4. A method according to anyone of the preceding claims, characterized in that it provides a grinding treatment of each cylindric seat (3) before or after the said treatment of localized surface hardening.

5. A crankcase for a reciprocating internal combustion engine provided with a body (3) having a structure substantially of ferritic type and having cylindric seats (2), characterized in that each of said seats (3) has a layer the surface structure of which is substantially of the martensitic type.

6. A crankcase according to claim 5, characterized in that the said layer (6) belongs to an annular area (5) arranged in an area next to the top dead center.

7. A crankcase according to claim 5 or 6, characterized in that between each of the said cylindric seats (3) the crankcase (2) presents a gap (4) inside which a cooling liquid can flow.

Dr. Ing. Luigi BOGGIO

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 017 708 (S.L.ENGEL et al.) *Claim 5; columns 2-4; figures 1,2* | 1-3 | C 21 D 9/14<br>C 21 D 1/09<br>F 16 J 10/04 |
| X | GB-A- 840 612 (TIROLER ROHREN -UND METALLWERKE) *The whole document* | 1 | |
| X | GB-A- 468 626 (LINDE) *The whole document* | 1,5,7 | |
| X | US-A-4 093 842 (D.I.SCOTT) *Claims; figures* | 1-3,5, 6,7 | |
| X | GB-A- 552 049 (BUDD INDUCTION HEATING) *Claims 1,6; figures* | 1,4,5 | TECHNICAL FIELDS SEARCHED (Int. Cl. ³) |
| A | CH-A- 493 738 (SULZER) | | C 21 D<br>F 16 J<br>F 02 F |
| A | GB-A- 470 999 (STANDARD MOTOR CO et al.) | | |

The present search report has been drawn up for all claims

| Place of search THE HAGUE | Date of completion of the search 28-04-1983 | Examiner MOLLET G.H.J. |
|---|---|---|